# EUROPÄISCHE PATENTSCHRIFT

(11) **EP 4 074 476 B1**
(45) Veröffentlichungstag und Bekanntmachung des Hinweises auf die Patenterteilung: **06.08.2025**
(21) Anmeldenummer: 22167736.2
(22) Anmeldetag: 12.04.2022
(51) Int. Cl.: B25J 13/08, B25J 19/02, B25J 15/02, B25J 15/08

(54) **GREIFER UND VERFAHREN ZUM GREIFEN UND PRÜFEN EINES GEGENSTANDS**
GRIPPER AND METHOD FOR GRIPPING AND TESTING AN ITEM
PRÉHENSEUR ET PROCÉDÉ DE PRÉHENSION ET DE VÉRIFICATION D'UN OBJET

(30) Priorität: 14.04.2021 DE 102021109315
(43) Veröffentlichungstag der Anmeldung: 19.10.2022
(73) Patentinhaber: Bundesdruckerei GmbH, 10969 Berlin (DE)
(72) Erfinder: Kuen, Jakob, 12209 Berlin (DE); Peinze, Franziska, 12587 Berlin (DE); Radtke, Patrick, 12559 Berlin (DE)
(74) Vertreter: Hentrich Patent- & Rechtsanwaltspartnerschaft mbB

(56) Entgegenhaltungen:
- EP-A1- 0 236 611
- EP-A2- 3 006 168
- WO-A1-2018/065757
- CN-A- 112 276 988
- DE-A1- 102014 211 772
- JP-B2- 5 588 392
- US-A1- 2012 031 549
- US-A1- 2015 298 321
- US-A1- 2019 091 875

## Beschreibung

Die Erfindung betrifft einen Greifer, insbesondere einen Greifer für die Nutzung bei der Herstellung von Ausweis-, Wert- oder Sicherheitsdokumenten, mit einem ersten Greiferfinger und einem zweiten Greiferfinger, die eingerichtet sind, einen, insbesondere dünnwandigen, Gegenstand mit ihren Greifflächen zu ergreifen, welcher in einen von den beiden Greiferfingern aufgespannten Zwischenraum eingebracht ist, wozu wenigstens einer der beiden Greiferfinger relativ bezüglich des anderen der beiden Greiferfinger verstellbar gelagert ist. Die Erfindung betrifft außerdem ein Verfahren zum Greifen und Prüfen eines Gegenstands mit einem solchen Greifer.

Der Greifer kann bestimmungsgemäß Einsatz bei der Herstellung von Ausweis-, Wert- oder Sicherheitsdokumenten finden, insbesondere bei der Herstellung einer Datenkarte, an die eine flexible Lasche angebracht werden soll. Der Greifer der vorliegenden Offenbarung ist aber nicht auf einen solchen Anwendungszweck beschränkt; er kann folglich auch in anderen Industriezweigen Einsatz finden.

Vorrichtungen und Verfahren zur Herstellung einer Datenkarte unter Nutzung eines eingangs erwähnten Greifers sind den Druckschriften DE 10 2012 112 383 A1, DE 10 2016 218 040 A1 und DE 10 2018 114 456 A1 der Anmelderin zu entnehmen und haben sich in der Praxis gut bewährt.

In der EP 0 236 611 A1 wird ein Robotergreifer gezeigt, bei dem in die einzelnen Greiferfinger optische Näherungssensoren integriert sind. Die Sensoren sind ausgestaltet mit einer lichtemittierenden Diode (LED) und einem Fototransistor in einer gemeinsamen Hülle.

In der US 2019 / 0 091 875 A1 wird ein Robotergreifer in Form eines Parallelgreifers beschrieben. Der Robotergreifer besteht aus zwei Greiferfingern, wobei mindestens einer der beiden Finger mit entsprechenden Sensoren ausgestattet ist. Diese Sensoren sind als Quader im Greiferfinger dargestellt. Diese Sensoren sind als Näherungssensoren ausgestaltet, um einen Gegenstand zu detektieren.

In der JP 5 588 392 B2 wird ein Robotergreifer gezeigt, der ein Sensormodul auf seiner Greiffläche umfasst. Hierbei liegt ein Antirutschsensormodul vor, das aus einer Mehrzahl einzelner Kontaktsensoren gebildet ist. Die Kontaktsensoren haben eine elektrisch leitende Verbindung, um entsprechend ein Verrutschen des ergriffenen Gegenstandes zu detektieren.

Die DE 10 2014 211 772 A1 beschrieben eine Zange, bei der einer der Greiferfinger mehrteilig, nämlich mit einem Greifbackenelement gebildet ist. Hierbei ist ein Sensor vorhanden, der auf der Greiffläche abgewandten Seite des Greiferfingers vorliegt. Aber um den Sensor zu aktivieren, ist der Zwischenraum zwischen dem Greifbackenelement und dem Greiferfinger zu schließen, wo ein metallischer (Kontakt-) Bereich vorliegt.

In der EP 3 006 168 A2 wird ein Greifer gezeigt, bei dem lediglich eine Greifbacke verstellt werden kann, durch Verschwenken eines Hebels. Auch hierbei ist dem Greiffinger ein Sensor zugeordnet, um das Vorhandensein eines Bauteils zwischen den beiden Greiferfingern zu detektieren.

In der WO 2018 / 065 757 A1 ist ein Robotergreifer gezeigt, in dessen Greiferfinger optische Sensoren integriert sind. Hierbei sollen Objekte erkannt und dann gegriffen werden anhand der optisch erfassten Informationen sowie anhand der Koloration der Gegenstände. Es wird ein reflektives System genutzt.

In der CN 112 276 988 A wird ebenfalls ein Robotergreifer gezeigt, der pneumatisch betätigbar ist. Hierbei sind in die Greiferfinger Sensoren integriert, wobei diese Sensoren dafür genutzt werden, um ein genaueres Ergreifen von Gegenständen zu.

Die Druckschrift US 2015 / 0 298 321 A1 beschreibt einen Greifer, bei dem im einen Greiferfinger ein Sender integriert ist, und bei dem im anderen Greiferfinger ein Empfänger integriert ist. Auf diese Weise kann der Inhalt eines zu ergreifenden Containers untersucht werden. Es wird Licht emitiert, das dann wiederum optisch erfasst wird. Der Gegenstand dieser Druckschrift ist immer auf die Untersuchung oder das Greifen von Proben in Form von Röhrchen gerichtet.

In der US 2012 / 0 031 549 A1 wird ein Parallelgreifer zum Ergreifen eines Klebestreifens beschrieben, der auf ein Solarmodul aufgeklebt werden soll. Hierbei ist in den Greiferfingern eine Mehrzahl von Sensoren integriert, die ein Wegrutschen des Klebestreifens erfassen sollen, damit der Klebevorgang gestoppt wird und das darunterliegende PV-Modul nicht zerkratzt.

Unter einem Ausweis-, Wert- oder Sicherheitsdokument wird im Folgenden ein papier- und/oder kunststoffbasiertes Dokument verstanden, auf dem personenspezifische und/oder dokumentenspezifische Informationen optisch lesbar aufgebracht sind, die eine Identifizierung des Nutzers oder des Dokumentes, beispielsweise für die Freigabe und Nutzung bestimmter Dienste oder Funktionen ermöglicht. Darunter fallen zum Beispiel Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Frachtbriefe oder sonstige Berechtigungsnachweise. Beispielweise kann das Dokument auch ein Wertgutschein oder eine Zugangskarte sein. Das Dokument kann einen Chip oder andere elektronische Bauteile aufweisen, insbesondere für die Speicherung personenspezifischer und/oder dokumentenspezifischer Informationen. Unter einer Datenkarte wird im Folgenden eine in einem Buchblock eines Ausweis-, Wert- oder Sicherheitsdokuments angeordnete papier- oder kunststoffbasierte Karte verstanden, auf der personenspezifische und/oder dokumentenspezifische Informationen optisch lesbar aufgebracht sind, die eine Identifizierung des Nutzers oder des Dokumentes, beispielsweise für die Freigabe und Nutzung bestimmter Dienste oder Funktionen ermöglicht. Die Datenkarte kann einen Chip oder andere elektronische Bauteile aufweisen, insbesondere für die Speicherung personenspezifischer und/oder dokumentenspezifischer Informationen.

Bei der Herstellung solcher Ausweis-, Wert- oder Sicherheitsdokumente wird eine Vielzahl von Schritten durchgeführt, wobei es aufgrund der zu fertigenden großen Stückzahlen dieser Dokumente zwingend erforderlich ist, dass alle an der Herstellung beteiligten Konstituenten der Maschine fehlerfrei funktionieren, oder dass etwaig auftretenden Fehler frühzeitig im Fertigungsprozess erkannt werden können.

Es ist daher die Aufgabe der vorliegenden Erfindung, einen Greifer und ein Verfahren anzugeben, die eine erhöhte Prozesssicherheit bei ihrem Einsatz in der Fertigung bieten.

Diese Aufgabe wird durch einen Greifer mit den Merkmalen des Anspruchs 1 und durch ein Verfahren mit den Merkmalen des Anspruchs 11 gelöst. Vorteilhafte Ausgestaltungen mit zweckmäßigen Weiterbildungen der Erfindung sind in den abhängigen Ansprüchen angegeben.

Erfindungsgemäß umfasst der erste Greiferfinger des Greifers einen Sender zur Emission von elektromagnetischen Wellen oder zur Emission von Schallwellen in den Zwischenraum, der von den beiden Greiferfingern aufgespannt wird. Dem ersten Greiferfinger oder dem zweiten Greiferfinger des Greifers ist außerdem ein Empfänger zugeordnet, der eingerichtet ist, zumindest einen Teil der vom Sender emittierten Wellen zu erfassen.

Auf diese Weise wird also in den Greifer eine Funktion nach Art einer "Schranke" aus elektromagnetischen Wellen oder aus Schallwellen integriert, wodurch die Anwesenheit des Materials oder des Gegenstands innerhalb des Zwischenraums zwischen den Greiferfingern und gegebenenfalls auch weitere Informationen über den zu ergreifenden Gegenstand ermittelt werden können. Damit ist also in den Greifer selbst eine Sensorik integriert, um das zu ergreifende Material - vor, während oder nach dem eigentlichen Greifen - zu erfassen oder ggfs. zu prüfen.

Da die Sender und/oder die Empfänger häufig sensitiv auf eine Druckbeanspruchung reagieren, ist erfindungsgemäße vorgesehen, dass der Sender auf einer der Greiffläche des ersten Greiferfingers abgewandten Seite des Greiferfingers angeordnet ist, und wenn der erste Greiferfinger derart ausgestaltet ist, um die vom Sender emittierten Wellen in den Zwischenraum zwischen den Greifflächen zu leiten.

Ein solches "Leiten" ist erfindungsgemäß dadurch ermöglicht, dass der erste Greiferfinger einen Durchtritt zum Zwischenraum umfasst, wobei dieser Durchtritt im Falle des Emittierens von Schallwellen mit einem Material oder mit Gas gefüllt ist, um eine Schallübertragung zu bewirken. Beim Entsenden von elektromagnetischen Wellen ist dieser Durchtritt gegebenenfalls auch luftleer (gasfrei), sodass dennoch eine Leitung von elektromagnetischen Wellen zum Zwischenraum möglich ist.

Um im Falle der Emission von Licht eine verbesserte Leitung in den Zwischenraum zu bieten, hat es sich als vorteilhaft erwiesen, wenn der Durchtritt mit einem transparenten oder transluzenten Material verfüllt in Form eines Lichtleiters vorliegt. Durch das Verfüllen des Durchtritts liegt außerdem ein verbesserter Schutz vor Verschmutzungen des Senders oder des Empfängers vor.

Der Durchtritt kann eine sich senkrecht zur Durchtrittslängsachse erstreckende längliche Form, erfindungsgemäß ist eine Rechteckform vorgesehen, aufweisen. Wird in einem solchen Fall der Durchtritt mit einer gleichmäßigen Intensität bestrahlt, so können daraus Rückschlüsse über die Position des Gegenstands oder des Materials zwischen den Greiferfingern getroffen werden. Ist der Durchtritt mit einer Rechteckform, mithin im Querschnitt rechteckig, gebildet, so besteht bei einer homogenen Bestrahlung des Durchtritts ein linearer Verlauf bezüglich der Abschattung, wenn ein Gegenstand in den Zwischenraum eingebracht wird.

Es hat sich als vorteilhaft erwiesen, wenn die Greifflächen mit einer Beschichtung versehen sind, die hinsichtlich des zu ergreifenden Gegenstands eine gute tribologische Paarung mit diesem eingeht. Die Beschichtung kann dabei vorteilhafter Weise derart ausgestaltet sein, dass in den Durchtritt oder an den Sender oder an den Empfänger kein Schmutz gelangt. Im Falle einer durch den Sender und den Empfänger gebildeten Lichtschranke, hat es sich ferner als vorteilhaft erwiesen, wenn die Greifflächen jeweils mit einer Antirutschschicht versehen sind, die transluzent oder transparent für vom Sender emittiertes Licht gebildet ist.

Es ist auch die Möglichkeit gegeben, dass der erste und/oder der zweite Greiferfinger selbst aus einem transluzenten oder transparenten Material gebildet sind, so dass auf einen Durchtritt verzichtet werden kann. Dies verbessert die Festigkeit der Greiferfinger, weil ihr Material dann nicht aufgrund des Vorhandenseins eines Durchtritts geschwächt ist.

Zwischen den Greiferfingern kann auch eine Reflexlichtschranke wirksam sein, wobei es dann bevorzugt ist, wenn der erste Greiferfinger neben dem Sender außerdem den Empfänger umfasst, und wenn dem zweiten Greiferfinger ein Reflektor zugewiesen ist oder der zweite Greiferfinger selbst aus einem reflektierenden Material besteht. In einer solchen Ausgestaltung kann es zudem möglich sein, dass ein etwaig an dem ersten Greiferfinger vorhandener Durchtritt eine in Durchtrittslängsachse orientierte konische Form aufweist, sodass sowohl der Sender als auch der Empfänger durch ein- und denselben Durchtritt auf den Zwischenraum gerichtet sind.

Beim Einsatz der Reflexlichtschranke ist auch die Möglichkeit gegeben, dass der zweite Greiffinger, der frei von Sender und Empfänger ist, einen Absorber umfasst oder selbst aus einem absorbierenden Material für die vom Sender emittierten Wellen besteht. Hierbei wird die Reflexion des gegriffenen Materials für die Auswertung verwendet. Während sich kein Gegenstand im Zwischenraum befindet, liegt eine Absorption der Wellen vor, so dass der Empfänger der Reflexlichtschranke keine oder nur eine geringe Intensität der Wellen erfassen kann. Ist im Zwischenraum ein fehlerfreier Gegenstand vorhanden, so reflektiert er die Wellen in Richtung des Empfängers, wodurch eine Intensität erfasst wird, die insbesondere in einem Bereich zwischen zwei Intensitätsschwellen liegt. Im Falle eines fehlerhaften Gegenstands läge die erfasste Intensität außerhalb des Bandes der beiden Schwellen.

Eine weitere Möglichkeit besteht in der Verwendung von Farbinformationen, das heißt, die ausgewertete Reflexinformation beruht auf der Auswertung spektraler Eigenschaften.

Wenn eine Antirutschschicht vorhanden ist, kann sie bei der Nutzung einer reflektierenden Konfiguration, beispielsweise bei der Nutzung einer Reflexlichtschranke, ferner eingerichtet sein, die vom Sender emittierten Wellen zu reflektieren oder zu absorbieren.

In Abhängigkeit der vom Greifer aufzubringenden Spannkraft ist auch die Möglichkeit gegeben, dass ein Gehäuse des Senders und/oder ein Gehäuse des Empfängers die Greiffläche wenigstens einer der beiden Greiferfinger bilden. Diese Gehäuse können auch in die Antirutschschicht eingebettet sein.

Eine verbesserte Positionsbestimmung oder Positionsüberwachung des Gegenstands im Zwischenraum zwischen den beiden Greiferfingern lässt sich dadurch realisieren, dass der Empfänger als ein Zeilensensor oder als ein Flächensensor vorliegt. Hierdurch lassen sich auch "Schattenwürfe" des zu ergreifenden Materials für die Positionsauswertung im Zwischenraum heranziehen.

Um eine verbesserte Überprüfung des zu ergreifenden Gegenstands oder des zu ergreifenden Materials zu bewirken, hat es sich als vorteilhaft erwiesen, wenn der Sender eingerichtet ist, Licht zu emittieren, und wenn in den optischen Weg des Lichts zwischen dem Sender und dem Empfänger wenigstens ein strahlformendes und/oder strahlumlenkendes optisches Element eingebracht ist. Auf diese Weise können der Sender und der Empfänger auch flexibler an den Greiferfingern angebracht werden, da durch die strahlformenden und/oder strahlumlenkenden Elemente die Lichtführung geeignet beeinflusst werden kann. Als strahlformende und/oder strahlumlenkende optische Elemente kommen beispielsweise Linsen, Spiegel, Filter, Lichtleiter und dergleichen in Betracht.

Eine verbesserte Prüfung und Auswertung des im Zwischenraum befindlichen Gegenstands oder einer Bewegung des Greifers als solchen, lässt sich dadurch bewerkstelligen, dass der erste Greiferfinger oder der zweite Greiferfinger mit einer auf den Zwischenraum gerichteten Kamera versehen ist, und dass dem ersten Greiferfinger oder dem zweiten Greiferfinger eine Beleuchtungseinrichtung zur Beleuchtung des Zwischenraums zugeordnet ist. Hierbei kann beispielsweise ein geeignetes Fenster in dem Greiferfinger vorliegen, um eine optische Bewertung oder Prüfung des zu ergreifenden Gegenstandes durchzuführen.

Das erfindungsgemäße Verfahren für das Greifen und Prüfen eines Gegenstands nutzt einen Greifer, der einen ersten Greiferfinger und einen zweiten Greiferfinger umfasst, die eingerichtet sind, den, insbesondere dünnwandigen, Gegenstand mit ihren Greifflächen zu ergreifen, wobei der erste Greiferfinger einen Sender zur Emission von elektromagnetischen Wellen oder zur Emission von Schallwellen umfasst, und wobei der erste oder der zweite Greiferfinger einen Empfänger umfasst, der eingerichtet ist, zumindest einen Teil der vom Sender emittierten Wellen zu erfassen. Das Verfahren umfasst insbesondere die folgenden Schritte:
- Durchführen einer Relativbewegung zwischen dem Greifer und dem Gegenstand und damit Positionieren des Gegenstands in einem von den beiden Greiffingern aufgespannten Zwischenraum,
- Ergreifen des Gegenstands mittels eines Bewegens von wenigstens einem der beiden Greiferfinger relativ bezüglich dem anderen der beiden Greiferfinger,
- Entsenden von elektromagnetischen Wellen oder von Schallwellen in den von den beiden Greiferfingern aufgespannten Zwischenraum mittels des Senders, wodurch die Wellen mit dem ergriffenen Gegenstand wechselwirken,
- Empfangen zumindest eines Teils der in den Zwischenraum eingebrachten Wellen mittels des Empfängers, und
- Prüfen des ergriffenen Gegenstands anhand der vom Empfänger erfassten Intensität der Wellen.

Auf diese Weise erfolgt also ein Greifen des Gegenstands unter Nutzung einer geeigneten Sensorik, die ein Prüfen des Gegenstands zwischen den Greiferfingern ermöglicht. Insbesondere wird dabei geprüft, ob die vom Sensor gemessene Intensität aufgrund des ergriffenen Gegenstands eine vorgegebene oder einstellbare Schwelle unterschreitet oder überschreitet.

In diesem Zuge hat es sich als vorteilhaft erwiesen, wenn eine vorgegebene oder einstellbare zweite Schwelle der Intensität festgelegt ist oder festgelegt wird, wobei sich die zweite Schwelle von der ersten Schwelle der Intensität unterscheidet, und wobei nur dann auf einen fehlerfreien zu ergreifenden Gegenstand geschlossen wird, wenn die vom Empfänger erfasste Intensität zwischen der ersten Schwelle und der zweiten Schwelle liegt. Wenn beispielsweise ein teilweise durchlässiges Gewebeband ergriffen wurde, so kann aufgrund der Auswertung der mehreren Schwellen für die Intensität eine Erkennung von Mehrfachabzügen, eine Erkennung von Klebestellen oder von Fehlermarken erfolgen. Nur ein Material, was zwischen den beiden Schwellen für die Intensität liegt, wird als "korrekt", mithin als fehlerfrei erkannt.

Es hat sich für eine geeignete Positionsbestimmung als vorteilhaft erwiesen, wenn mittels des Empfängers ein Dämpfungsspektrum der Intensität erfasst wird. Anhand des Dämpfungsspektrums wird dann auf die Lage des Gegenstands im Zwischenraum geschlossen. Der Gegenstand wird nur dann als fehlerfrei erkannt, wenn das Dämpfungsspektrum demjenigen Spektrum einer vorgegebenen Lage des Gegenstands entspricht.

Offenbart wird an dieser Stelle auch noch ein Verfahren für das Greifen eines Gegenstands mit dem vorstehend erläuterten Greifer. Es umfasst die folgenden Schritte:
- Entsenden von elektromagnetischen Wellen oder von Schallwellen in einen von den beiden Greiferfingern aufgespannten Zwischenraum mittels des Senders,
- Empfangen zumindest eines Teils der in den Zwischenraum eingebrachten Wellen mittels des Empfängers,
- Durchführen einer Relativbewegung zwischen dem Greifer und dem Gegenstand und damit Positionieren des Gegenstands in einem von den beiden Greiffingern aufgespannten Zwischenraum, wobei die Intensität der vom Empfänger erfassten Wellen gemessen und aufgezeichnet wird und das Vorhandensein eines zu ergreifenden Gegenstands im Zwischenraum festgestellt wird, wenn die vom Empfänger erfasste Intensität eine vorgegebene oder einstellbare Schwelle unterschreitet oder überschreitet, und
- Ergreifen des Gegenstands mittels eines Bewegens von wenigstens einem der beiden Greiferfinger relativ bezüglich dem anderen der beiden Greiferfinger.

Dieses Verfahren ermöglicht die Identifizierung und/oder Prüfung eines zu ergreifenden Gegenstands noch vor seinem eigentlichen Ergreifen.

Weitere Merkmale, Eigenschaften und Vorteile der vorliegenden Erfindung werden im Folgenden anhand von Ausführungsvarianten unter Bezugnahme auf die beigefügten Figuren näher beschrieben. Alle bisher und im Folgenden beschriebenen Merkmale sind dabei sowohl einzeln als auch in einer beliebigen Kombination miteinander vorteilhaft. Die im Folgenden beschriebenen Ausführungsvarianten stellen lediglich Beispiele dar, welche den Gegenstand der Erfindung jedoch nicht beschränken. Dabei zeigen:
- Fig. 1: eine perspektivische Ansicht eines buchartigen Ausweis-, Wert-, oder Sicherheitsdokuments,
- Fig. 2a-2f): Verfahrensschritte zur Herstellung des buchartigen Ausweis-, Wert- oder Sicherheitsdokuments aus Figur 1,
- Fig. 3: eine Anbringungsvorrichtung zur Anbringung der Lasche an der noch laschenlosen Datenkarte (Schritt gemäß Fig. 2a),
- Fig. 4: einen perspektivisch dargestellten Greifer,
- Fig. 5: einen Längsschnitt durch den Greifer aus Figur 4,
- Fig. 6: eine Detailansicht einer Konfiguration aus Sender und Empfänger, die aufgrund ihrer Anordnung an ein- und demselben Greiferfinger eine Reflexlichtschranke bilden, und
- Fig. 7: eine Darstellung der vom Empfänger erfassten Intensität, wenn ein Gegenstand im Zwischenraum der Greiferfinger ergriffen ist, wobei zwei unterschiedliche Intensitäts-Schwellen (I₁, I₂) illustriert sind.

Die vorliegende Erfindung betrifft einen Greifer 300, der - rein beispielhaft, aber bevorzugt - bei der Fertigung von buchförmigen Ausweis-, Wert- oder Sicherheitsdokumenten 100 Einsatz finden kann. Der vorliegende Greifer 300 ist aber nicht auf diesen Einsatzzweck beschränkt; er kann also auch in anderen Industriezweigen, insbesondere in allen mit Robotern ausgerüsteten Industriebereichen, verwendet werden.

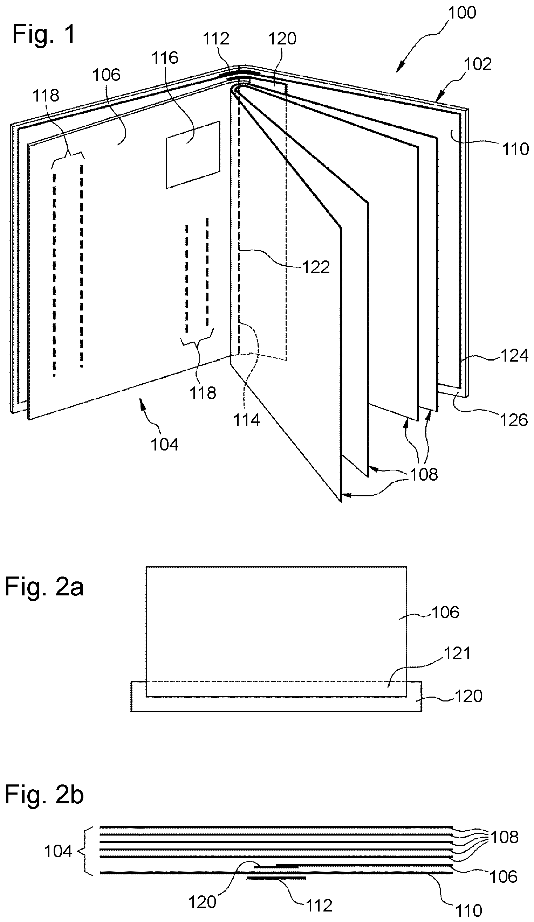

In Figur 1 ist jedenfalls ein solches eingangs erwähntes buchförmiges Ausweis-, Wert- oder Sicherheitsdokument 100 gezeigt. Das Ausweis-, Wert- oder Sicherheitsdokument 100 ist beispielsweise ein Identifikationsdokument, insbesondere ein Reisepass oder ein Personalausweis. Das Ausweis-, Wert- oder Sicherheitsdokument 100 weist einen Einband 102 sowie einen im Einband 102 gehaltenen Passbuchblock 104 auf. Der Passbuchblock 104 besteht aus einer Datenkarte 106, mehreren Passbuchseiten 108, einem Vorsatzblatt 110 sowie einem Fälzelband 112, die mit einer Naht 114 miteinander verbunden sind.

Die Datenkarte 106 ist eine kunststoff-, oder papierbasierte Karte, auf der personen- und/oder dokumentenspezifische Informationen aufgebracht sind. Beispielsweise kann die Datenkarte 106 ein Passbild 116 und personenbezogene Informationen 118 eines Nutzers aufweisen. Die Informationen 118 sind vorzugsweise in einer maschinenlesbaren Form auf die Datenkarte 106 aufgebracht. Die Datenkarte 106 weist ebenfalls ein maschinenlesbares Identifikationsmerkmal auf, das die Datenkarte 106 eindeutig während des Herstellungsprozesses des Ausweis-, Wert- oder Sicherheitsdokuments 100 identifiziert. Die Datenkarte 106 weist des Weiteren einen Chip auf, in dem personen- und/oder dokumentenspezifische Informationen gespeichert werden können. Insbesondere weist der Chip einen gesicherten Speicherbereich zur Speicherung der personen- und/oder dokumentenspezifischen Informationen auf. Des Weiteren kann die Datenkarte 106 sichtbare und/oder unsichtbare Sicherheitsmerkmale aufweisen, die ein Fälschen der Datenkarte 106 verhindern.

An der Datenkarte 106 ist eine, insbesondere flexible, Lasche 120 vorgesehen, die aus einem Endlosband 220 hergestellt ist. Das Endlosband 220 besteht aus einem Gewebe, das mit einem flexiblen Kunststoffmaterial beschichtet und/oder ummantelt ist. Die Lasche 120 ist form- und/oder stoffschlüssig an der Datenkarte 106 befestigt und somit Teil der Datenkarte 106. Auf der Lasche 120 können weitere Sicherheitsmerkmale vorgesehen sein.

Die Passbuchseiten 108 sind jeweils aus einem Druckbogen 304, vorzugsweise einem Papierbogen geschnitten und entlang ihrer Mittellinie 122 gefaltet. Die Passbuchseiten 108 können bedruckt sein, beispielsweise mit weiteren personen- und/oder dokumentenspezifischen Informationen, Seitenzahlen oder anderen Informationen. Im Falle des deutschen Reisepasses werden diese personen- und/oder dokumentenspezifischen Daten und Informationen unter Ziffern 11 bis 14 auf der ersten oder den ersten Passbuchseiten 108 aufgedruckt oder aufgebracht sein. Die Passbuchseiten 108 können des Weiteren für den Empfang von Stempeln, beispielsweise Visastempeln, vorbereitet sein. Vorzugsweise enthalten die Passbuchseiten 108 ebenfalls Sicherheitsmerkmale, die ein Fälschen der Passbuchseiten 108 verhindern. Die Sicherheitsmerkmale können beispielweise aufgedruckt, in die Passbuchseiten 108 eingearbeitet oder in diese eingebracht sein. Beispielsweise enthalten die Passbuchseiten 108 eine Perforation, wobei sich die Perforation durch die Passbuchseiten 108 vorzugsweise konisch verjüngt.

Das Vorsatzblatt 110 bildet den äußeren Abschluss des Passbuchblocks 104. Mit einer Außenseite 124 des Vorsatzblattes 110 wird der Passbuchblock 104 auf eine Innenseite 126 des Einbandes 102 aufgeklebt.

Das Fälzelband 112 dient als Verstärkung des Nahtbereichs und ist vor dem Vernähen des Passbuchblocks 104 auf die Außenseite 124 des Vorsatzblattes 110 aufgeklebt.

Die Herstellung des Ausweis-, Wert- oder Sicherheitsdokuments 100 soll nachfolgend anhand der Figuren 2a bis 2f beschrieben werden.

**In** einem ersten Verfahrensschritt wird die Datenkarte 106 bereitgestellt und die Lasche 120 an der Datenkarte angebracht (Figur 2a). Dabei wird die Lasche 120 in einem Überlappungsbereich 121 form- und/oder stoffschlüssig mit der Datenkarte 106 verbunden und auf die gewünschte Länge geschnitten.

Anschließend wird das Fälzelband 112 auf den Nahtbereich des Vorsatzblattes 110 aufgebracht und der Passbuchblock 104 bestehend aus den Passbuchseiten 108, der Datenkarte 106 und dem Vorsatzblatt 110 zusammengestellt (Figur 2b). Die Datenkarte 106 wird derart in den Passbuchblock 104 eingelegt, dass die Lasche 120 im Nahtbereich angeordnet ist.

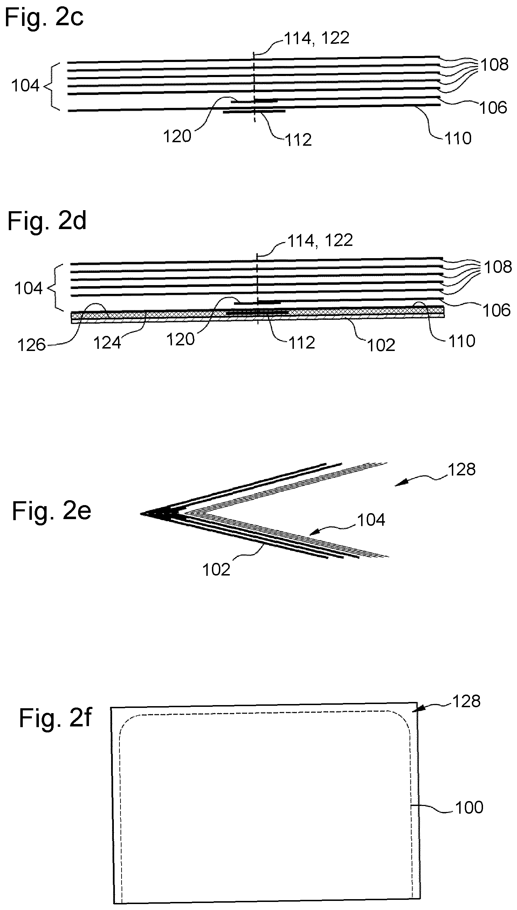

Anschließend wird der Passbuchblock 104 mit einer Naht 114 entlang der Mittellinie 122 der Passbuchseiten 108 vernäht (Figur 2c).

Nach oder zeitgleich mit dem Vernähen des Passbuchblocks 104 wird der Einband 102 bereitgestellt. Die Innenseite 126 des Einbands 102 wird mit der Außenseite 124 des Vorsatzblattes 110 verklebt und der so entstandene Passbuchrohling 128 gefaltet (Figuren 2d und 2e).

Anschließend werden die freien Ränder des Passbuchrohlings 128 bearbeitet und somit der Passbuchrohling 128 auf das endgültige Format des Ausweis-, Wert- oder Sicherheitsdokuments 100 geschnitten (Figur 2f). Als freie Ränder werden die an den Buchrücken angrenzenden Ränder sowie der dem Buchrücken gegenüberliegende Rand des Passbuchrohlings 128 bzw. des Ausweis-, Wert- oder Sicherheitsdokuments 100 angesehen.

Nachfolgend können weitere Sicherheitsmerkmale, beispielsweise eine Perforation, auf die Passbuchseiten 108 aufgebracht oder in diese eingebracht werden. Nach der Herstellung des Ausweis-, Wert- oder Sicherheitsdokuments 100 erfolgt üblicherweise eine weitere Bearbeitung in Form einer Qualitätskontrolle und ein Personalisieren des Chips der Datenkarte 106.

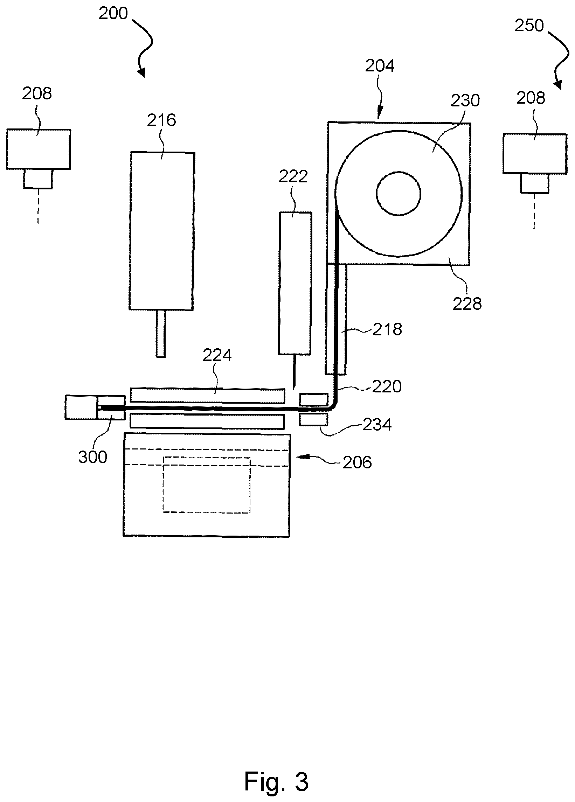

In Figur 3 ist - erneut rein beispielhaft - eine Anbringungsvorrichtung 200 zum Anbringen der Lasche 120 an der Karte zur Vervollständigung der Datenkarte 106 gezeigt. Hier ist mittels einer Bereitstellungseinheit 204 ein Endlosband 220 in einem Magazin 228 für das Endlosband 220 bereitgestellt. Mit einer Schneideinrichtung 222 kann das Endlosband 220 in einzelne Laschen 120 unterteilt werden. Ist das Endlosband 220 von einer ersten Rolle 230 vollständig abgewickelt, wird automatisch das Endlosband 220 einer zweiten Rolle 230 nachgeführt und mit dem Ende des Endlosbandes 220 der ersten Rolle 230 verbunden, so dass keine Unterbrechung des Herstellungszyklus erfolgt. Eine Bearbeitungseinheit 206 weist eine Aufnahme für die laschenlose Datenkarte 106 auf. Eine Steuerung kann anschließend eine Halte- und Transporteinrichtung 224 derart ansteuern, dass die Datenkarte 106 in der gewünschten Position in die Aufnahme gelegt werden kann. Die Bearbeitungseinheit 206 weist des Weiteren Mittel 216 zum form- und/oder stoffschlüssigen Verbinden der Lasche 102 mit der laschenlosen Datenkarte 106 in einem Überlappungsbereich 121 auf. Die Mittel 216 sind durch eine Sonotrode gebildet, durch die die Lasche 120 mit der laschenlosen Datenkarte 106 ultraschallverschweißt wird. Die Bereitstellungseinheit 204 weist außerdem eine Zuführeinrichtung 218 für das Endlosband 220 für die Lasche 120 auf, ferner eine Schneideinrichtung 222 für das Zerschneiden des Endlosbands 220, sowie einen Greifer 300 zum Ergreifen des Endlosbands 120. Das Magazin der Bereitstellungseinheit 204 kann aber auch mit einem zusätzlichen Antrieb versehen sein, um die Rolle 230 aktiv abwickeln zu können.

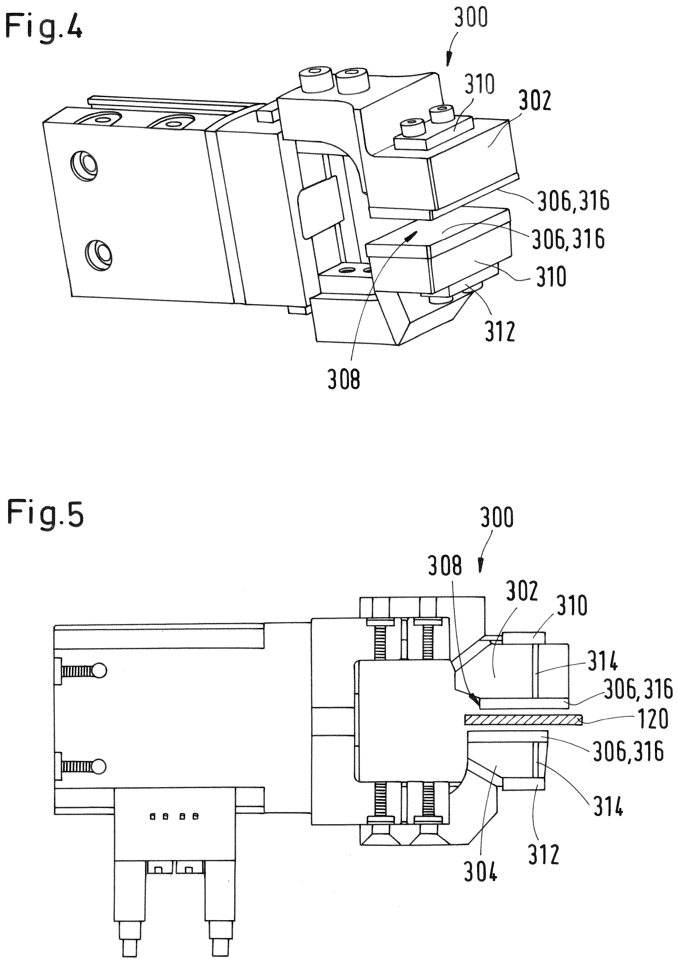

In Figur 4 ist der in Figur 3 nur schematisch dargestellte Greifer 300 vergrößert in einer Perspektive gezeigt. Dieser Greifer 300 ist erfindungsgemäß als ein Parallelgreifer gebildet, der pneumatisch betätigt wird. Eine elektromotorische oder hydraulische Betätigung ist ebenfalls möglich. Der Greifer 300 umfasst einen ersten Greiferfinger 302 und einen zweiten Greiferfinger 304, die eingerichtet sind, einen, insbesondere dünnwandigen, Gegenstand 120 mit ihren Greifflächen 306 zu ergreifen, der in einen von den beiden Greiferfingern 302,304 aufgespannten Zwischenraum 308 eingebracht ist, wozu wenigstens einer der beiden Greiferfinger 302, 304 relativ bezüglich des anderen der beiden Greiferfinger 302, 304 verstellbar gelagert ist. Vorliegend können beide Greiferfinger 302, 304 aufeinander zu bewegt werden, um beispielsweise die Lasche 120 zwischen sich zu ergreifen. Der Greifer 300 ist mit einer geeigneten Sensorik ausgestattet, um den ergriffenen oder zu ergreifenden Gegenstand 120 zu prüfen oder dessen korrekte Lage zu erfassen. Hierfür ist der erste Greiferfinger 302 mit einem Sender 310 zur Emission von elektromagnetischen Wellen oder zur Emission von Schallwellen in den Zwischenraum 308 ausgerüstet. Vorliegend ist der Sender 310 - lediglich beispielhaft - derart eingerichtet, um Licht zu emittieren. Vorliegend ist außerdem dem zweiten Greiferfinger 304 ein Empfänger 312 zugeordnet, der eingerichtet ist, zumindest einen Teil der vom Sender 310 emittierten Wellen zu erfassen. Der Sender 310 und der Empfänger 312 sind auf einer gemeinsamen, fluchtenden Linie zentriert angeordnet. Es ist zu erkennen, dass der Sender 310 auf einer der Greiffläche 306 des ersten Greiferfingers 302 abgewandten Seite des Greiferfingers 302 angeordnet ist. In analoger Weise ist der Empfänger 312 auf einer der Greiffläche 306 des zweiten Greiferfingers 304 abgewandten Seite des Greiferfingers 304 angeordnet. Der erste Greiferfinger 302 ist derart ausgestaltet, um die vom Sender 310 emittierten Wellen in den Zwischenraum 308 zwischen den Greifflächen 306 zu leiten. Auch der zweite Greiferfinger 304 ist derart ausgestaltet, um die aus dem Zwischenraum 308 tretenden Wellen an den Empfänger 312 zu leiten.

In Figur 5 ist zu erkennen, dass die beiden Greiferfinger 302, 304 hierfür jeweils einen Durchtritt 314 zum Zwischenraum 308 vorsehen. Dieser Durchtritt 314 ist erfindungsgemäß als eine Bohrung gestaltet, wobei ein Durchtritt 314 mit einer Rechteckform im Querschnitt vorgesehen ist. Sind die Durchtritte 314 im Querschnitt rechteckig geformt, so hat es sich ferner als vorteilhaft erwiesen, wenn der Empfänger 312 als ein Zeilensensor oder als ein Flächensensor vorliegt, da auf diese Weise eine genauere Prüfung oder Positionserfassung des ergriffenen oder zu ergreifenden Gegenstands 120 im Zwischenraum 308 gegeben ist. Um den Sender 310 und/oder den Empfänger 312 vor Verschmutzungen und Staub zu schützen, ist die Möglichkeit gegeben, dass der jeweilige Durchtritt 314 mit einem transparenten oder transluzenten Material verfüllt in Form eines Lichtleiters vorliegt, insbesondere dann, wenn der Sender 310 und der Empfänger 312 eine Lichtschranke bilden.

Um den Gegenstand, insbesondere das Gewebeband der Lasche 120, sicher greifen zu können, sind die Greifflächen 306 vorliegend jeweils mit einer Antirutschschicht 316 versehen, die ebenfalls transluzent oder transparent für vom Sender 310 emittiertes Licht gebildet ist. Die Antirutschschicht 316 kann beispielsweise aus Silikon gebildet sein. Sollten es die bauraumbedingten Anforderungen notwendig machen, dass der Sender 310 und/oder der Empfänger 312 hinsichtlich der Position versetzt werden muss, so kann - im Falle eines Senders 310 zur Emission von Licht - in den optischen Weg des Licht zwischen dem Sender 310 und dem Empfänger 312 wenigstens ein strahlformendes und/oder strahlumlenkendes optisches Element eingebracht werden. Als optische Elemente kommen beispielsweise Spiegel, Linsen, Lichtleiter, Filter oder dergleichen in Betracht. Bei einer geeigneten Ausgestaltung der Durchtritte 314 ist die vorteilhafte zusätzliche Möglichkeit gegeben, dass der erste Greiferfinger 302 oder der zweite Greiferfinger 304 mit einer auf den Zwischenraum 308 gerichteten Kamera versehen ist, und dass dem ersten Greiferfinger 302 oder dem zweiten Greiferfinger 304 eine Beleuchtungseinrichtung zur Beleuchtung des Zwischenraums 308 zugeordnet ist.

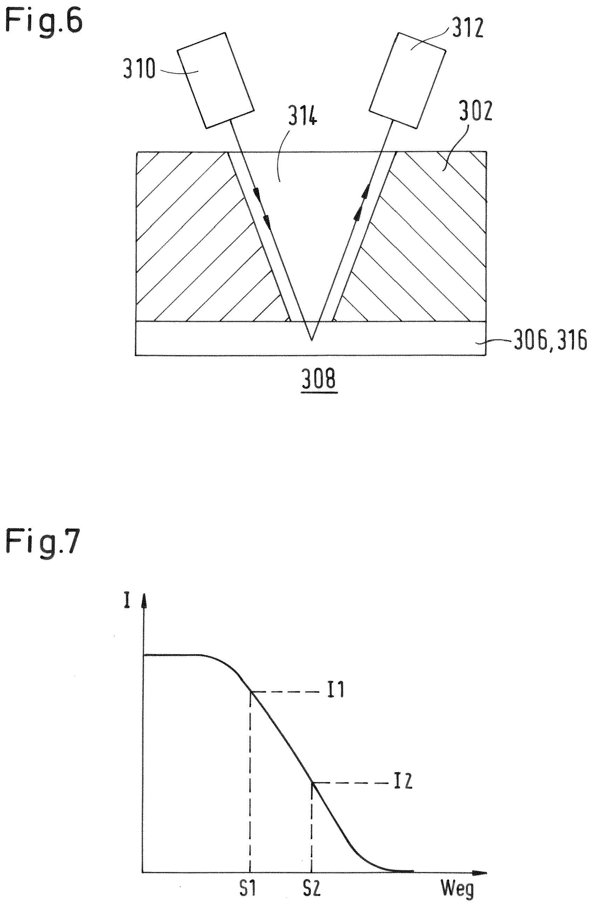

Figur 6 verweist auf die Möglichkeit, dass der Sender 310 und der Empfänger 312 auch an ein- und demselben Greiferfinger 302, 304 angeordnet sein können, wobei der Sender 310 und der Empfänger 312 in dem gezeigten Beispiel eine Reflexlichtschranke bilden. Eine betriebssichere Konfiguration ist zudem dadurch gegeben, dass der Durchtritt 314 entlang seiner Durchtrittslängsachse konisch gebildet ist, verjüngend zur Greiffläche 306 hin. Auch hier liegt die Antirutschschicht 316 vor, die ebenfalls transluzent oder transparent für vom Sender 310 emittierte Wellen gebildet ist. Vorliegend ist auf der gegenüberliegenden Seite, insbesondere an dem zweiten Greiferfinger 304, ein nicht näher gezeigter Reflektor angeordnet oder der zweite Greiferfinger 304 ist selbst aus einem reflektierenden Material gebildet. Alternativ kann auch die auf dem zweiten Greiferfinger 304 angeordnete Antirutschschicht 316 eingerichtet sein, die vom Sender 310 emittierten Wellen zu reflektieren. Bei einer derartigen Reflexlichtschranke ist auch die Möglichkeit gegeben, dass der zweite Greiffinger 304, der frei von Sender 310 und Empfänger 312 ist, einen Absorber umfasst oder selbst aus einem absorbierenden Material für die vom Sender 310 emittierten Wellen besteht. Hierbei wird die Reflexion des gegriffenen Materials für die Auswertung verwendet. Während sich kein Gegenstand 120 im Zwischenraum 308 befindet, liegt eine Absorption der Wellen vor, so dass der Empfänger 312 der Reflexlichtschranke keine oder nur eine geringe Intensität der Wellen erfassen kann. Ist im Zwischenraum 308 ein fehlerfreier Gegenstand 120 vorhanden, so reflektiert dieser die Wellen in Richtung des Empfängers 312, wodurch eine Intensität der Wellen erfasst wird, die insbesondere in einem Bereich zwischen zwei vorgegebenen Intensitätsschwellen I₁, I₂ liegt. Im Falle eines fehlerhaften Gegenstands 120 läge die erfasste Intensität außerhalb des Bandes der beiden Schwellen I₁, I₂.

Das Verfahren zum Greifen und Prüfen eines Gegenstands 120 mit einem vorstehend erläuterten Greifer 300 umfasst insbesondere die folgenden Schritte:
- Durchführen einer Relativbewegung zwischen dem Greifer 300 und dem Gegenstand 120 und damit Positionieren des Gegenstands 120 in dem von den beiden Greiffingern 302, 304 aufgespannten Zwischenraum 308,
- Ergreifen des Gegenstands 120 mittels eines Bewegens von wenigstens einem der beiden Greiferfinger 302, 304 relativ bezüglich dem anderen der beiden Greiferfinger 302, 304,
- Entsenden von elektromagnetischen Wellen oder von Schallwellen in den von den beiden Greiferfingern 302, 304 aufgespannten Zwischenraum 308 mittels des Senders 310, wodurch die Wellen mit dem ergriffenen Gegenstand 120 wechselwirken,
- Empfangen zumindest eines Teils der in den Zwischenraum 308 eingebrachten Wellen mittels des Empfängers 312, und
- Prüfen des ergriffenen Gegenstands 120 anhand der vom Empfänger 312 erfassten Intensität der Wellen.

Durch die Erfassung und Auswertung der Intensität hinsichtlich des Über- oder Unterschreitens einer Intensitätsschwelle, lässt sich auf ein fehlerfreies oder auf ein fehlerhaftes Material zwischen den beiden Greiferfingern 302, 304 schließen; insbesondere dann, wenn sich die vom Sensor oder Empfänger 312 gemessene Intensität über oder unter einer vorgegebenen oder einstellbaren Schwelle befindet.

Figur 7 verweist auf die Möglichkeit der Überwachung von zwei unterschiedlichen Intensitätsschwellen I₁, I₂, wobei also in diesem Beispiel eine vorgegebene oder einstellbare zweite Schwelle der Intensität festgelegt ist oder festgelegt wurde, die sich von der ersten Schwelle der Intensität unterscheidet. In diesem Fall wird nur dann auf einen fehlerfreien ergriffenen Gegenstand 120 geschlossen, wenn die vom Empfänger 312 erfasste Intensität zwischen der ersten Schwelle und der zweiten Schwelle der Intensität liegt. Durch eine solche Ausgestaltung ist es auch möglich, Mehrfachabzüge, Klebestellen oder Fehlermarken zu erkennen. Nur Material, welches innerhalb dieser beiden Schwellen liegt, wird als fehlerfrei erkannt.

Eine weitere Möglichkeit der Positionsbestimmung des Gegenstands 120 im Zwischenraum 308 zwischen den beiden Greiferfingern 302, 304 ist dadurch gegeben, dass mittels des Empfängers 312 ein Dämpfungsspektrum der Intensität erfasst wird, dass anhand des Dämpfungsspektrums auf die Lage des Gegenstands 120 im Zwischenraum 308 geschlossen wird, und dass der Gegenstand 120 nur dann als fehlerfrei ergriffen erkannt wird, wenn das Dämpfungsspektrum demjenigen Spektrum einer vorgegebenen Lage des ergriffenen Gegenstands 120 entspricht.

Im Ergebnis zeichnet sich die vorliegende Erfindung also dadurch aus, dass der Greifer 300 mit einer zusätzlichen Sensorik zur Überprüfung des Vorhandenseins oder auch zur Überprüfung von Eigenschaften des zu ergreifenden Gegenstandes 120 ausgerüstet ist.

### BEZUGSZEICHENLISTE

- 100: Ausweis-, Wert- oder Sicherheitsdokument
- 102: Einband
- 104: Passbuchblock
- 106: Datenkarte
- 108: Passbuchseiten
- 110: Vorsatzblatt
- 112: Fälzelband
- 114: Naht
- 116: Passbild
- 118: Daten oder Informationen
- 120: Lasche
- 121: Überlappungsbereich
- 122: Mittellinie
- 124: Außenseite des Vorsatzblattes
- 126: Innenseite des Einbandes
- 128: Passbuchrohling
- 200: Anbringungsvorrichtung (Anbringen der Lasche der Datenkarte)
- 204: Bereitstellungseinheit
- 206: Bearbeitungseinheit
- 208: Erkennungsvorrichtung
- 216: Mittel zum Verbinden der Lasche und der Datenkarte
- 218: Zuführeinrichtung
- 220: Endlosband
- 222: Schneideinrichtung
- 224: Halte- und Transporteinrichtung
- 228: Magazin für Endlosband
- 230: Rolle für Endlosband
- 234: Mittel zum Versiegeln der Ränder der Lasche
- 300: Greifer
- 302: Erster Greiferfinger
- 304: Zweiter Greiferfinger
- 306: Greiffläche
- 308: Zwischenraum
- 310: Sender
- 312: Empfänger
- 314: Durchtritt
- 316: Antirutschschicht

## Patentansprüche

1. Greifer (300) mit einem ersten Greiferfinger (302) und einem zweiten Greiferfinger (304), die eingerichtet sind, einen Gegenstand (120) mit ihren Greifflächen (306) zu ergreifen, der in einen von den beiden Greiferfingern (302, 304) aufgespannten Zwischenraum (308) eingebracht ist, wozu wenigstens einer der beiden Greiferfinger (302, 304) relativ bezüglich des anderen der beiden Greiferfinger (302, 304) verstellbar gelagert ist, wobei der erste Greiferfinger (302) einen Sender (310) zur Emission von elektromagnetischen Wellen oder zur Emission von Schallwellen in den Zwischenraum (308) umfasst, und dass der erste Greiferfinger (302) oder der zweite Greiferfinger (304) einen Empfänger (312) umfasst, der eingerichtet ist, zumindest einen Teil der vom Sender (310) emittierten Wellen zu erfassen, wobei der Sender (310) auf einer der Greiffläche (306) des ersten Greiferfingers (302) abgewandten Seite des Greiferfingers (302) angeordnet ist, und dass der erste Greiferfinger (302) derart ausgestaltet ist, um die vom Sender (310) emittierten Wellen in den Zwischenraum (308) zwischen den Greifflächen (306) zu leiten, wobei der erste Greiferfinger (302) einen Durchtritt (314) zum Zwischenraum (308) umfasst, und dass der Durchtritt (314) eine sich senkrecht zur Durchtrittslängsachse erstreckende Rechteckform aufweist.

2. Greifer (300) nach Anspruch 1, **dadurch gekennzeichnet, dass** der Durchtritt (314) mit einem transparenten oder transluzenten Material verfüllt in Form eines Lichtleiters vorliegt.

3. Greifer (300) nach Anspruch 1 oder 2, **dadurch gekennzeichnet, dass** die Greifflächen (306) jeweils mit einer Antirutschschicht (316) versehen sind, die transluzent oder transparent für vom Sender (310) emittiertes Licht gebildet ist.

4. Greifer (300) nach einem der Ansprüche 1 bis 3, **dadurch gekennzeichnet, dass** der erste Greiferfinger (302) den Sender (310) und den Empfänger (312) umfasst, und dass dem zweiten Greiferfinger (304) ein Reflektor zugewiesen ist oder der zweite Greiferfinger (304) selbst aus einem reflektierendem Material besteht.

5. Greifer (300) nach einem der Ansprüche 1 bis 3, **dadurch gekennzeichnet, dass** der erste Greiferfinger (302) den Sender (310) und den Empfänger (312) umfasst, und dass der zweite Greiffinger (302) einen Absorber für die vom Sender (310) emittierten Wellen umfasst oder selbst aus einem absorbierenden Material besteht.

6. Greifer (300) nach Anspruch 4 oder 5, **dadurch gekennzeichnet, dass** die Greiffläche (306) des zweiten Greiferfingers (304) mit einer Antirutschschicht (316) versehen ist, die eingerichtet ist, die vom Sender (310) emittierten Wellen zu reflektieren, oder zu absorbieren.

7. Greifer (300) nach Anspruch 1, **dadurch gekennzeichnet, dass** ein Gehäuse des Senders (310) und/oder ein Gehäuse des Empfängers (312) die Greiffläche (306) wenigstens einer der beiden Greiferfinger (302, 304) bilden.

8. Greifer (300) nach einem der Ansprüche 1 bis 7, **dadurch gekennzeichnet, dass** der Empfänger (312) als ein Zeilensensor oder als ein Flächensensor vorliegt.

9. Greifer (300) nach einem der Ansprüche 1 bis 8, **dadurch gekennzeichnet, dass** der Sender (310) eingerichtet ist, Licht zu emittieren, und dass in den optischen Weg des Licht zwischen dem Sender (310) und dem Empfänger (312) wenigstens ein strahlformendes und/oder strahlumlenkendes optisches Element eingebracht ist.

10. Greifer (300) nach einem der Ansprüche 1 bis 9, **dadurch gekennzeichnet, dass** der erste Greiferfinger (302) oder der zweite Greiferfinger (304) mit einer auf den Zwischenraum (308) gerichteten Kamera versehen ist, und dass dem ersten Greiferfinger (302) oder dem zweiten Greiferfinger (304) eine Beleuchtungseinrichtung zur Beleuchtung des Zwischenraums (308) zugeordnet ist.

11. Verfahren zum Greifen und Prüfen eines Gegenstands (120) mit einem Greifer (300) nach einem der vorangehenden Ansprüche, der einen ersten Greiferfinger (302) und einen zweiten Greiferfinger (304) umfasst, die eingerichtet sind, den Gegenstand (120) mit ihren Greifflächen (306) zu ergreifen, wobei der erste Greiferfinger (306) einen Sender (310) zur Emission von elektromagnetischen Wellen oder zur Emission von Schallwellen umfasst, und wobei der erste oder der zweite Greiferfinger (302, 304) einen Empfänger (312) umfasst, der eingerichtet ist, zumindest einen Teil der vom Sender (310) emittierten Wellen zu erfassen, umfassend die Schritte:
- Durchführen einer Relativbewegung zwischen dem Greifer (300) und dem Gegenstand (120) und damit Positionieren des Gegenstands (120) in einem von den beiden Greiffingern (302, 304) aufgespannten Zwischenraum (308),
- Ergreifen des Gegenstands (120) mittels eines Bewegens von wenigstens einem der beiden Greiferfinger (302, 304) relativ bezüglich dem anderen der beiden Greiferfinger (302, 304),
- Entsenden von elektromagnetischen Wellen oder von Schallwellen in den von den beiden Greiferfingern (302, 304) aufgespannten Zwischenraum (308) mittels des Senders (310), wodurch die Wellen mit dem ergriffenen Gegenstand (120) wechselwirken,
- Empfangen zumindest eines Teils der in den Zwischenraum (308) eingebrachten Wellen mittels des Empfängers (312), und
- Prüfen des ergriffenen Gegenstands (120) anhand der vom Empfänger (312) erfassten Intensität der Wellen.

12. Verfahren nach Anspruch 11, **dadurch gekennzeichnet, dass** mittels des Empfängers (312) ein Dämpfungsspektrum der Intensität erfasst wird, dass anhand des Dämpfungsspektrums auf die Lage des Gegenstands (120) im Zwischenraum (308) geschlossen wird, und dass der Gegenstand (120) nur dann als fehlerfrei erkannt wird, wenn das Dämpfungsspektrum demjenigen Spektrum einer vorgegebenen Lage des Gegenstands (120) entspricht.

## Claims

1. A gripper (300) with a first gripper finger (302) and a second gripper finger (304), which are set up to grip an object (120) with their gripping surfaces (306), which is introduced into an intermediate space (308) spanned by the two gripper fingers (302, 304), for which purpose at least one of the two gripper fingers (302, 304) is mounted so as to be adjustable relative to the other of the two gripper fingers (302, 304), the first gripper finger (302) comprising a transmitter (310) for emitting electromagnetic waves or for emitting sound waves into the intermediate space (308), and in that the first gripper finger (302) or the second gripper finger (304) comprises a receiver (312) which is set up to detect at least some of the waves emitted by the transmitter (310), the transmitter (310) being arranged on a side of the gripper finger (302) facing away from the gripping surface (306) of the first gripper finger (302), and in that the first gripper finger (302) is designed in such a way to guide the waves emitted by the transmitter (310) into the intermediate space (308) between the gripping surfaces (306), wherein the first gripper finger (302) comprises a passage (314) to the intermediate space (308), and in that the passage (314) has a rectangular shape extending perpendicular to the longitudinal axis of the passage.

2. The gripper (300) according to claim 1, **characterized in that** the passage (314) is filled with a transparent or translucent material in the form of a light guide.

3. The gripper (300) according to claim 1 or 2, **characterized in that** the gripping surfaces (306) are each provided with an anti-slip layer (316) which is translucent or transparent to light emitted by the transmitter (310)

4. The gripper (300) according to any one of claims 1 to 3, **characterized in that** the first gripper finger (302) comprises the transmitter (310) and the receiver (312), and **in that** a reflector is assigned to the second gripper finger (304) or the second gripper finger (304) itself consists of a reflective material.

5. The gripper (300) according to any one of claims 1 to 3, **characterized in that** the first gripper finger (302) comprises the transmitter (310) and the receiver (312), and **in that** the second gripper finger (302) comprises an absorber for the waves emitted by the transmitter (310) or itself consists of an absorbent material.

6. The gripper (300) according to claim 4 or 5, **characterized in that** the gripping surface (306) of the second gripper finger (304) is provided with an anti-slip layer (316) which is arranged to reflect or absorb the waves emitted by the transmitter (310).

7. The gripper (300) according to claim 1, **characterized in that** a housing of the transmitter (310) and/or a housing of the receiver (312) form the gripping surface (306) of at least one of the two gripper fingers (302, 304).

8. The gripper (300) according to any one of claims 1 to 7, **characterized in that** the receiver (312) is present as a line sensor or as an area sensor.

9. The gripper (300) according to any one of claims 1 to 8, **characterized in that** the transmitter (310) is arranged to emit light, and **in that** at least one beam-shaping and/or beam-deflecting optical element is introduced into the optical path of the light between the transmitter (310) and the receiver (312).

10. The gripper (300) according to any one of claims 1 to 9, **characterized in that** the first gripper finger (302) or the second gripper finger (304) is provided with a camera directed towards the intermediate space (308), and **in that** the first gripper finger (302) or the second gripper finger (304) is assigned to an illumination device for illuminating the intermediate space (308).

11. A method for gripping and testing an object (120) with a gripper (300) according to one of the preceding claims, comprising a first gripper finger (302) and a second gripper finger (304), which are arranged to grip the object (120) with their gripping surfaces (306), wherein the first gripper finger (306) comprises a transmitter (310) for emitting electromagnetic waves or for emitting sound waves, and wherein the first or the second gripper finger (302, 304) comprises a receiver (312) which is arranged to detect at least a part of the waves emitted by the transmitter (310), comprising the steps of:
- Performing a relative movement between the gripper (300) and the object (120) and thus positioning the object (120) in an intermediate space (308) spanned by the two gripper fingers (302, 304),
- Gripping the object (120) by moving at least one of the two gripper fingers (302, 304) relative to the other of the two gripper fingers (302, 304),
- Emitting electromagnetic waves or sound waves into the intermediate space (308) spanned by the two gripper fingers (302, 304) by means of the transmitter (310), whereby the waves interact with the gripped object (120),
- Receiving at least part of the waves introduced into the intermediate space (308) by means of the receiver (312), and
- Checking the gripped object (120) on the basis of the intensity of the waves detected by the receiver (312).

12. The method according to claim 11, **characterized in that** an attenuation spectrum of the intensity is detected by means of the receiver (312), **in that** the position of the object (120) in the intermediate space (308) is inferred on the basis of the attenuation spectrum, and **in that** the object (120) is only detected as being free of defects if the attenuation spectrum corresponds to that spectrum of a predetermined position of the object (120).

## Revendications

1. Préhenseur (300) avec un premier doigt de préhenseur (302) et un second doigt de préhenseur (304) qui sont configurés pour prendre un objet (120) avec leurs surfaces de préhension (306), qui est introduit dans un espace intermédiaire (308) tendu par les deux doigts de préhenseur (302, 304), pour lequel au moins un des deux doigts de préhenseur (302, 304) est monté de manière réglable par rapport à l'autre des deux doigts de préhenseur (302, 304), dans lequel le premier doigt de préhenseur (302) comprend un émetteur (310) pour l'émission d'ondes électromagnétiques ou pour l'émission d'ondes sonores dans l'espace intermédiaire (308), et en ce que le premier doigt de préhenseur (302) ou le second doigt de préhenseur (304) comprend un récepteur (312) qui est configuré pour détecter au moins une partie des ondes émises par l'émetteur (310), dans lequel l'émetteur (310) est disposé sur un côté du doigt de préhenseur (302) opposé à la surface de préhension (306) du premier doigt de préhenseur (302), et en ce que le premier doigt de préhenseur (302) est conçu de manière à guider les ondes émises par l'émetteur (310) dans l'espace intermédiaire (308) entre les surfaces de préhension (306), dans lequel le premier doigt de préhenseur (302) comprend un passage (314) vers l'espace intermédiaire (308), et en ce que le passage (314) présente une forme rectangulaire s'étendant perpendiculairement à l'axe longitudinal de passage.

2. Préhenseur (300) selon la revendication 1, **caractérisé en ce que** le passage (314) est rempli d'un matériau transparent ou translucide sous forme d'un guide de lumière.

3. Préhenseur (300) selon la revendication 1 ou 2, **caractérisé en ce que** les surfaces de préhension (306) sont respectivement dotées d'une couche antidérapante (316) qui est translucide ou transparente à de la lumière émise par l'émetteur (310).

4. Préhenseur (300) selon l'une quelconque des revendications 1 à 3, **caractérisé en ce que** le premier doigt de préhenseur (302) comprend l'émetteur (310) et le récepteur (312), et **en ce qu'**un réflecteur est associé au second doigt de préhenseur (304) ou le second doigt de préhenseur (304) consiste lui-même en un matériau réfléchissant.

5. Préhenseur (300) selon l'une quelconque des revendications 1 à 3, **caractérisé en ce que** le premier doigt de préhenseur (302) comprend l'émetteur (310) et le récepteur (312), et **en ce que** le second doigt de préhenseur (302) comprend un absorbeur des ondes émises par l'émetteur (310) ou consiste lui-même en un matériau absorbant.

6. Préhenseur (300) selon la revendication 4 ou 5, **caractérisé en ce que** la surface de préhension (306) du second doigt de préhenseur (304) est dotée d'une couche antidérapante (316) qui est configurée pour réfléchir, ou absorber, les ondes émises par l'émetteur (310).

7. Préhenseur (300) selon la revendication 1, **caractérisé en ce qu'**un boîtier de l'émetteur (310) et/ou un boîtier du récepteur (312) forment la surface de préhension (306) d'au moins un des deux doigts de préhenseur (302, 304).

8. Préhenseur (300) selon l'une quelconque des revendications 1 à 7, **caractérisé en ce que** le récepteur (312) se présente comme un capteur de ligne ou un capteur de surface.

9. Préhenseur (300) selon l'une quelconque des revendications 1 à 8, **caractérisé en ce que** l'émetteur (310) est configuré pour émettre de la lumière, et **en ce qu'**au moins un élément optique de formation de faisceau et/ou de déviation de faisceau est introduit dans le trajet optique de la lumière entre l'émetteur (310) et le récepteur (312).

10. Préhenseur (300) selon l'une quelconque des revendications 1 à 9, **caractérisé en ce que** le premier doigt de préhenseur (302) ou le second doigt de préhenseur (304) est doté d'une caméra orientée vers l'espace intermédiaire (308), et **en ce qu'**un appareil d'éclairage est associé au premier doigt de préhenseur (302) ou au second doigt de préhenseur (304) pour éclairer l'espace intermédiaire (308).

11. Procédé de préhension et de contrôle d'un objet (120) avec un préhenseur (300) selon l'une quelconque des revendications précédentes, qui comprend un premier doigt de préhenseur (302) et un second doigt de préhenseur (304) qui sont configurés pour prendre l'objet (120) avec leurs surfaces de préhension (306), dans lequel le premier doigt de préhenseur (306) comprend un émetteur (310) pour émettre des ondes électromagnétiques ou pour émettre des ondes sonores, et dans lequel le premier ou le second doigt de préhenseur (302, 304) comprend un récepteur (312) qui est configuré pour détecter au moins une partie des ondes émises par l'émetteur (310), comprenant les étapes de :
- réalisation d'un mouvement relatif entre le préhenseur (300) et l'objet (120) et ainsi positionnement de l'objet (120) dans un espace intermédiaire (308) tendu par les deux doigts de préhenseur (302, 304),
- préhension de l'objet (120) au moyen d'un déplacement d'au moins un des deux doigts de préhenseur (302, 304) par rapport à l'autre des deux doigts de préhenseur (302, 304),
- émission d'ondes électromagnétiques ou d'ondes sonores dans l'espace intermédiaire (308) tendu par les deux doigts de préhenseur (302, 304) au moyen de l'émetteur (310), moyennant quoi les ondes interagissent ainsi avec l'objet pris (120),
- réception d'au moins une partie des ondes introduites dans l'espace intermédiaire (308) au moyen du récepteur (312), et
- contrôle de l'objet pris (120) à l'aide de l'intensité des ondes détectée par le récepteur (312).

12. Procédé selon la revendication 11, **caractérisé en ce qu'**un spectre d'atténuation de l'intensité est détecté au moyen du récepteur (312), **en ce que** la position de l'objet (120) dans l'espace intermédiaire (308) est déduite à l'aide du spectre d'atténuation, et **en ce que** l'objet (120) est reconnu comme sans défaut uniquement si le spectre d'atténuation correspond au spectre d'une position prédéfinie de l'objet (120).
